# EUROPÄISCHE PATENTANMELDUNG

(11) **EP 4 832 262 A1**
(43) Veröffentlichungstag der Anmeldung: **28.10.2026**
(21) Anmeldenummer: 26169020.0
(22) Anmeldetag: 30.03.2026
(51) Int. Cl.: H01R 13/52, H01R 13/533, H02G 15/04

(54) **STECKERANORDNUNG**

(30) Priorität: 24.04.2025 DE 102025115792
(71) Anmelder: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(57) **Zusammenfassung**

Die Erfindung betrifft eine Steckeranordnung (1a, 1b) mit wenigstens einem Stecker (2a, 2b) und einem in den Stecker (2a, 2b) einmündenden Kabel (3). Das Kabel (3) ist mit einem aus chemisch beständigem Material bestehenden Schlauch (12) umhüllt und bildet so eine gas- und flüssigkeitsdichte Umhüllung aus. Der Schlauch (12) bildet eine dichte Schlauchverbindung zwischen Kabel (3) und Stecker (2a, 2b) aus.

## Beschreibung

Die Erfindung betrifft eine Steckeranordnung.

Eine derartige Steckeranordnung umfasst wenigstens einen Stecker mit einem in diesem einmündenden Kabel.

Mit derartigen Steckeranordnungen werden leitungsgebundene Verbindungen zwischen Elektronikeinheiten hergestellt, wobei diese zur Datenübertragung und zur Stromversorgung der einzelnen Elektronikeinheiten genutzt werden.

Mit derartigen Steckeranordnungen werden insbesondere verteilte Systeme mit Steuereinheiten und diesen zugeordneten Sensoren bereitgestellt. Die Steuereinheiten steuern abhängig von Sensorsignalen Anlagen, Maschinen und dergleichen.

Derartige Systeme werden insbesondere in Chemiebereichen, wie z.B. in der Halbleiterindustrie eingesetzt. Dort sind Chemiekabinette in Form von geschlossenen Schränken vorgesehen, in welchen Arbeitsprozesse durchgeführt, die mittels Sensoren kontrolliert und überwacht werden. Die Sensoren sind in diesen Chemiekabinetten vorhanden und mit Kabelverbindungen in Form von Steckeranordnungen mit einer Steuereinheit verbunden, die sich außerhalb der Chemiekabinette befindet. Die Steuereinheit steuert abhängig von Sensorsignalen die Arbeitsprozesse in den Chemiekabinetten.

Ein Problem hierbei besteht darin, dass in den Chemiekabinetten aggressive Chemikaliendämpfe, wie z.B. Dämpfe von Salzsäure oder Flusssäure vorhanden sind. Diese Dämpfe greifen die Kabel und Stecker oder Kabelverbindungen an und führen so zu gravierenden Schäden.

Um diesem Problem zu begegnen, wird versucht, Steckeranordnungen, d.h. Kabelverbindungen im Bereich der Chemiekabinette zu vermeiden, was jedoch nur im eingeschränkten Umfang möglich ist. Die Kabel werden dabei typisch von den Sensoren zur Steuereinheit in einem Stück vorgelegt und dabei durch mehrere Wände geführt, die die Chemiekabinette eingrenzen. Dies bedeutet einen erheblichen Montageaufwand. Weiterhin ist ein Auswechseln der Sensoren mit den Kabelverbindungen im Schadensfall äußerst aufwändig und führt zu längeren Ausfallzeiten der jeweiligen Anlage.

Der Erfindung liegt die Aufgabe zugrunde, eine Steckeranordnung mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Steckeranordnung mit wenigstens einem Stecker und einem in den Stecker einmündenden Kabel. Das Kabel ist mit einem aus chemisch beständigem Material bestehenden Schlauch umhüllt, der eine gas- und flüssigkeitsdichte Umhüllung ausbildet. Der Schlauch bildet eine dichte Schlauchverbindung zwischen Kabel und Stecker aus.

Durch den aus chemisch beständigem Material bestehenden Schlauch ist das Kabel gegen aggressive Chemikalien wie z.B. Säuren, spezifisch Salzsäure oder Flusssäure geschützt.

Dabei bildet der Schlauch eine dichte, vollständige Umhüllung des Kabels, der das Kabel allseitig gegen aggressive Chemikalien schützt, wobei sich der Schlauch bevorzugt über die gesamte Länge des Schlauchs erstreckt.

Dabei schützt der Schlauch insbesondere auch den Bereich des Kabels, der in den Stecker einmündet und verhindert dabei ein Eindringen von aggressiven Chemikalien, insbesondere Dämpfen, in das Innere des Steckers, so dass dort freiliegende Leitungen und elektrische Kontakte nicht beschädigt werden.

Dies wird erfindungsgemäß dadurch erreicht, dass der Schlauch eine dichte Schlauchverbindung zwischen Kabel und Stecker ausbildet.

Gemäß einer konstruktiv vorteilhaften Ausgestaltung ist ein über ein Ende des Kabels hervorstehender Endabschnitt des Schlauchs durch eine Schlauchverschraubung im Stecker gelagert.

Insbesondere ist die Schlauchverschraubung von einem Innengewinde eines Umgehäuses, das auf einem Außengewinde eines Steckerteils aufgeschraubt ist, gebildet.

Mit der Schlauchverschraubung ist der Endabschnitt des Schlauchs lagestabil zwischen Steckerkomponenten gelagert und dichtet die Nahtstelle zwischen diesen ab, wodurch ein Eindringen von Chemikaliendämpfen in das Innere des Steckers effizient verhindert wird.

Bereits dadurch ist gewährleistet, dass die erfindungsgemäße Steckeranordnung in Umgebungen eingesetzt werden kann, in denen aggressive Chemikalien wie Säuren, insbesondere in Form von Dämpfen vorhanden sind.

Der Stecker selbst bildet nach außen ein massives Formteil, das bereits aufgrund dieser Bauform beständiger gegen aggressive Chemikalien ist als das Kabel der Steckeranordnung.

Besonders vorteilhaft weist der Stecker Gehäusekomponenten bestehend aus chemisch beständigem Material auf.

Damit besteht vorteilhaft die gesamte Außenhülle des Steckers aus chemisch beständigem Material.

Somit ist ein vollständiger Schutz des Steckers und des Kabels gegen aggressive Chemikalien gegeben.

Das chemisch beständige Material, aus dem der Schlauch und vorteilhaft die Gehäusekomponenten des Steckers bestehen, ist vorteilhaft ein Kunststoff insbesondere ein säurebeständiger Kunststoff.

Vorteilhaft ist das chemisch beständige Material

| | |
|---|---|
| PE | (Polyethylen) oder |
| PP | (Polypropylen) oder |
| PFA | (Perfluoralkoxy) oder |
| PVDF | (Polyvinylidenfluorid) oder |
| PEEK | (Polyetheretherketon). |

Auch andere chemisch beständige oder säurebeständige Polymere können eingesetzt werden, wie z.B.

| | |
|---|---|
| PTFE | (Polytetrafluorethylen) |
| ECTFE | (Ethylen-Chlortrifluorethylen) |
| CPVC | (chloriertes Polyvinylchlorid) |

Die erfindungsgemäße Steckeranordnung kann vorteilhaft dazu genutzt werden, um unterschiedliche Elektronikkomponenten in Anlagen, insbesondere in Anlagen der Halbleiterindustrie einzusetzen, bei welchen ein oder mehrere Chemiekabinette vorhanden sind, in welchen Arbeitsprozesse durchgeführt werden, bei welchen Dämpfe aggressiver Chemikalien, insbesondere Säuren wie z.B. Salzsäure oder Flusssäure, freigesetzt sind. Insbesondere können mit den Steckeranordnungen Sensoren in diesen Chemiekabinetten mit Steuereinheiten verbunden werden, wobei die Steuereinheiten außerhalb der Chemiekabinette angeordnet sein können.

In an sich bekannterweise mündet an einem Ende des Steckers das Kabel ein. Der Stecker weist am gegenüberliegenden Ende ein Steckverbindungselement auf.

Damit kann das Steckverbindungselement des Steckers mit einem korrespondierenden Steckverbindungselement eines weiteren Steckers verbunden werden.

Derartige Steckeranordnungen können in unterschiedlichen Applikationen eingesetzt werden.

Eine erste Applikationsmöglichkeit der Steckeranordnung ist dadurch gegeben, dass der Stecker in einer Wanddurchführung gelagert ist.

Dabei ist der Stecker abgedichtet in einer Öffnung einer Wand gelagert.

Bei dieser Konfiguration liegt das am Stecker einmündende Kabel an einer Seite der Wand, an der gegenüberliegenden Seite der Wand ist an den Stecker ein weiterer Stecker anschließbar.

Diese Konfiguration kann besonders vorteilhaft für Fälle eingesetzt werden, wenn die Wand einen Teil einer Umhausung eines Bereichs wie eines Chemiekabinetts bildet, in welchem aggressive Chemikaliendämpfe vorhanden sind.

Das Kabel der Steckeranordnung, deren Stecker in der Wanddurchführung gelagert ist, ragt dann in diesen mit Chemikaliendämpfen belasteten Bereich, beispielsweise um einen dort vorhandenen Sensor anzuschließen. Auf der anderen Seite der Wand schließt beispielsweise ein nicht mit Chemikaliendämpfen belasteter Bereich an, in dem sich eine Steuereinheit befinden kann. Diese Steuereinheit kann mit einer Steckeranordnung, die ein nicht mit einem Schlauch geschütztes Kabel aufweist, an den Stecker in der Wanddurchführung angeschlossen werden.

Eine weitere Applikation für die erfindungsgemäße Steckeranordnung ist die Herstellung eines elektrischen Anschlusses eines Entnahmekopfs eines Entnahmesystems an eine externe Einheit, z.B. eine Steuereinheit.

Der Entnahmekopf kann an einen Behälter angeschlossen werden, um Flüssigkeit aus dem Behälter zu entnehmen oder in diesen einzufüllen. Die Befüll- und Entleervorgänge werden von der Steuereinheit gesteuert, die über die Steckeranordnung mit dem Entnahmekopf verbunden ist.

Gemäß einer ersten Konfiguration kann ein Stecker einer Steckeranordnung direkt an dem Entnahmekopf angeschlossen sein.

Alternativ kann ein Kabel der Steckeranordnung am Entnahmekopf ausmünden.

In den Behältern werden Chemikalien wie z.B. Säure gelagert, so dass im Bereich der Behälter und des Entnahmekopfs aggressive Chemikaliendämpfe entstehen können. Die hierfür eingesetzte erfindungsgemäße Steckeranordnung ist gegen diese Chemikaliendämpfe vollständig geschützt.

Die erfindungsgemäße Steckeranordnung kann auch in pharmazeutischen Produktionsstätten, Galvanikbetrieben oder generell in säurebelasteten Fertigungsbereichen eingesetzt werden.

Die Erfindung wird im Folgenden anhand der Zeichnungen erläutert. Es zeigen:
- Figur 1:: Ausführungsbeispiel mit zwei erfindungsgemäßen Steckeranordnungen.
- Figur 2:: Schnittdarstellung der Anordnung gemäß Figur 1.
- Figur 3:: Erste perspektivische Darstellung der Steckeranordnung gemäß Figur 1 bei gelösten Steckern.
- Figur 4:: Zweite perspektivische Darstellung der Steckeranordnung gemäß Figur 1 bei gelösten Steckern.
- Figur 5:: Applikationsbeispiel der erfindungsgemäßen Steckeranordnung mit einem in einer Wanddurchführung gelagerten Stecker.
- Figur 6:: Schnittdarstellung der Anordnung gemäß Figur 5.
- Figur 7:: Applikation der erfindungsgemäßen Steckeranordnung in einem Entnahmesystem.

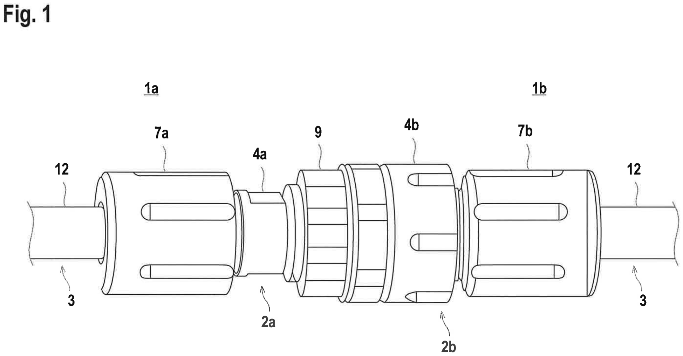

Die Figuren 1 bis 4 zeigen ein Ausführungsbeispiel mit zwei erfindungsgemäßen Steckeranordnungen 1a, 1b, die jeweils einen Stecker 2a, 2b und ein in diesem einmündendes Kabel 3 aufweisen.

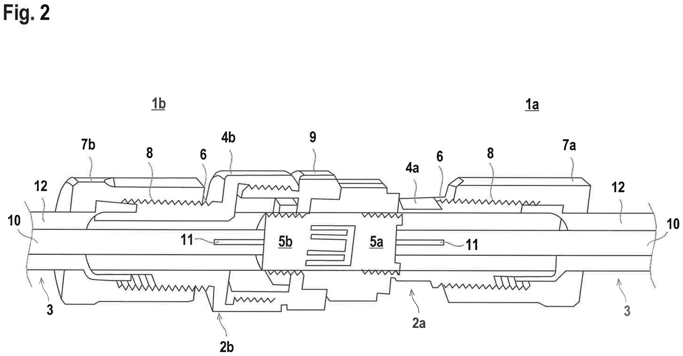

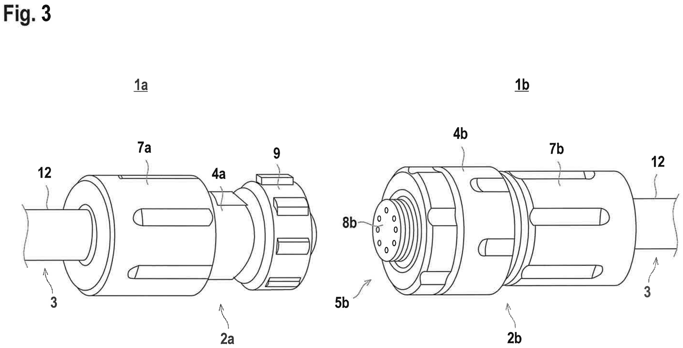

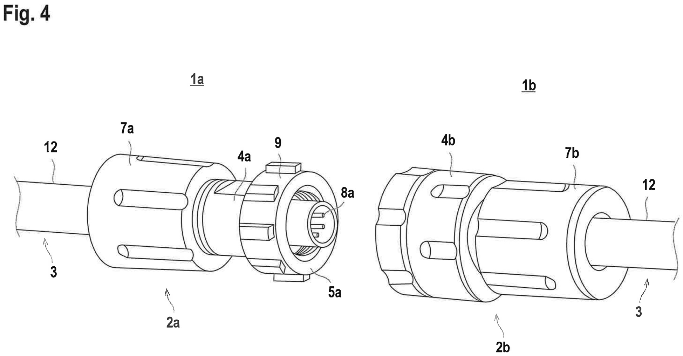

Die Figuren 1 und 2 zeigen die Steckeranordnungen 1a, 1b mit miteinander verbundenen Steckern 2a, 2b. Die Figuren 3 und 4 zeigen die Steckeranordnungen 1a, 1b bei voneinander gelösten Steckern 2a, 2b.

Jeder Stecker 2a, 2b weist ein Gehäuseteil 4a, 4b mit einem an diesem gelagerten Steckverbindungselement 5a, 5b, wobei am Gehäuseteil 4a, 4b ein Außengewinde 6 vorhanden ist (Figur 2), auf. Auf das Außengewinde 6 ist ein Umgehäuse 7a, 7b mit einem Innengewinde 8 aufgeschraubt. Mit den Steckverbindungselementen 5a, 5b werden die Stecker 2a, 2b miteinander verbunden. Hierzu weisen die Steckverbindungselemente 5a, 5b komplementär ausgebildete mechanische und elektrische Anschlusselemente 8a, 8b auf.

Mittels einer Mutter 9 am ersten Stecker 2a, 2b können die Steckverbindungselemente 5a, 5b durch eine Schraubverbindung aneinander fixiert werden.

Das Gehäuseteil 4a, 4b mit einem Steckerteil sowie das Umgehäuse 7a, 7b sind in axialer Richtung von jeweils einem Hohlraum durchsetzt, in welchem ein Endabschnitt des jeweiligen Kabels 3 geführt ist.

Das Kabel 3 weist in bekannter Weise einen Kabelmantel 10 auf, der elektrische Leitungen 11 im Kabel 3 umgibt.

Erfindungsgemäß sind beide Kabel 3 der Steckeranordnung 1a, 1b jeweils mit einem Schlauch 12 aus chemisch beständigem Material umhüllt.

Der Schlauch 12 bildet eine am Kabel 3 dicht anschließende Umhüllung mit vorzugsweise konstanter Wandstärke, wobei sich der Schlauch 12 über die gesamte Länge des Kabels 3 erstreckt, und eine dichte, lückenlose Umhüllung ausbildet.

Wie aus Figur 2 ersichtlich, ist ein über das im Stecker 2a, 2b liegende Ende des Kabels 3 hervorstehender Endabschnitt des Schlauchs 12 zwischen dem Innengewinde 8 des Umghäuses 7a, 7b und dem Außengewinde 6 des Gehäuseteils 4a, 4b jedes Steckers 2a, 2b gelagert, wodurch eine Schlauchverschraubung des Schlauchs 12 erhalten wird, die für eine Abdichtung von Nahtstellen zwischen den genannten Steckerkomponenten sorgt.

Der Schlauch 12 besteht aus einem chemisch beständigen, vorzugsweise säurerestistenten Kunststoff.

Vorteilhaft bestehen auch das Gehäuseteil 4a, 4b und ggf. die weiteren Gehäusekomponenten der Stecker 2a, 2b aus einem derartigen Kunststoff.

Vorteilhaft ist das chemisch beständige Material
- PE: (Polyethylen) oder
- PP: (Polypropylen) oder
- PFA: (Perfluoralkoxy) oder
- PVDF: (Polyvinylidenfluorid) oder
- PEEK: (Polyetheretherketon).

Durch die Ausbildung des Schlauchs 12 und der Gehäusekomponenten aus dem chemisch beständigen Kunststoff sind diese resistent gegen aggressive Chemikalien wie Säuren, insbesondere Flusssäure oder Salzsäure. Damit kann die Steckeranordnung 1a, 1b in Umgebungen eingesetzt werden, in welchen Chemikaliendämpfe bestehend aus diesen aggressiven Chemikalien vorhanden sind.

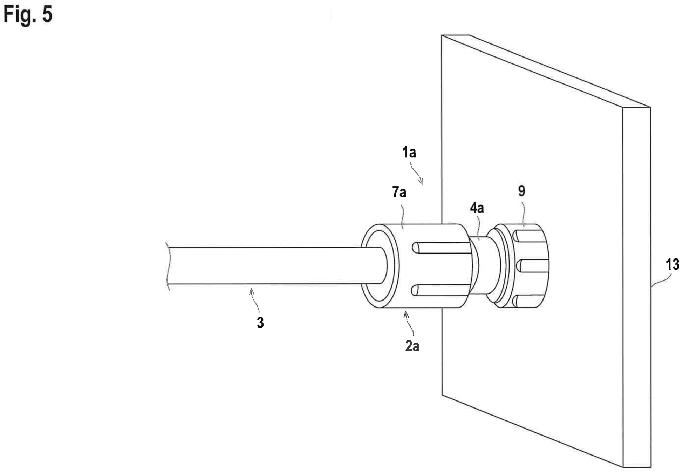

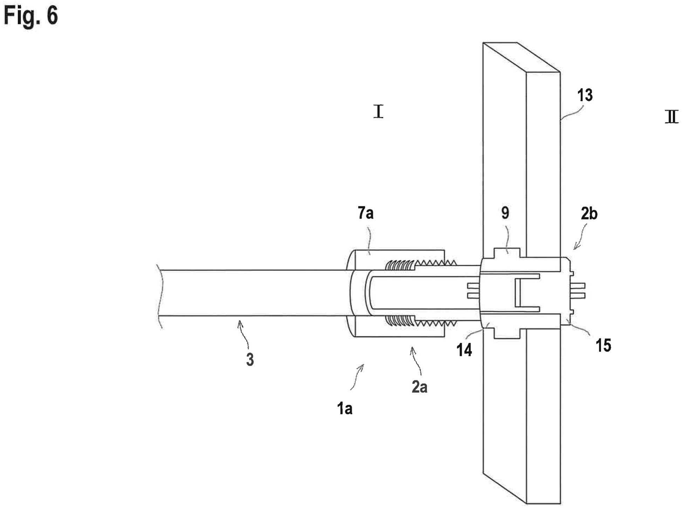

Die Figuren 5 und 6 zeigen ein erstes Applikationsbeispiel der erfindungsgemäßen Steckeranordnung 1a. Der Stecker 2a der Steckeranordnung 1a ist in einer Wanddurchführung einer Wand 13 gelagert, wobei der Stecker 2a abgedichtet in einer Öffnung 14 der Wand 13 liegt, vorteilhaft dort eingeschraubt ist.

Die Wand 13 trennt einen abgeschlossenen Bereich I, wie z.B. ein Chemiekabinett einer Anlage der Halbleiterindustrie, von einem Außenbereich II. Im Bereich I sind aggressive Chemikaliendämpfe vorhanden, nicht jedoch im Außenbereich II. Die Steckeranordnung 1a ist durch Ausbildung deren Komponenten aus dem chemisch beständigen Material gegen die Chemikaliendämpfe geschützt.

Die Steckeranordnung 1a kann an einen Sensor im Bereich I angeschlossen sein. An den Stecker 2a der Steckeranordnung 1a, der in der Wanddurchführung gelagert ist, kann ein anderer Stecker angeschlossen werden, dessen Kabel 3 zu einer Steuereinheit führt.

Figur 6 zeigt einen Steckerausschnitt 15 dieses Steckers 2a. Dieser Stecker 2a und das an diesen anschließende Kabel braucht nicht mit chemisch beständigem Material ausgestaltet zu sein, da im Außenbereich II keine aggressiven Chemikaliendämpfe vorhanden sind.

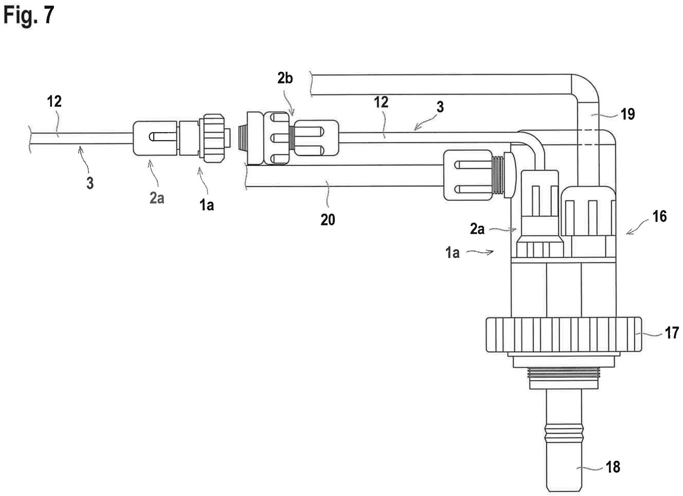

Figur 7 zeigt ein zweites Applikationsbeispiel, bei welchem mehrere Steckeranordnungen 1a bei einem Entnahmesystem eingesetzt werden. Das Entnahmesystem weist einen Entnahmekopf 16 auf, der mittels eines Schraubverschlusses 17 an eine Behälteröffnung eines (nicht dargestellten) Behälters angeschlossen werden kann. Nach erfolgtem Anschluss ist der Entnahmekopf 16 mit einem Tauchrohr 18 verbunden, das in den Behälter ragt.

Im Behälter ist eine Flüssigkeit gelagert, die im vorliegenden Fall von einer aggressiven Chemikalie wie z.B. Flusssäure oder Salzsäure, gebildet sein kann.

Mittels einer nicht dargestellten Pumpe kann über den Entnahmekopf 16 Flüssigkeit aus dem Behälter entnommen oder diesem zugeführt werden. Dabei wird die Flüssigkeit in einer Leitung 19 geführt, die am Entnahmekopf 16 ausmündet. Zudem mündet eine Belüftungsleitung 20 am Entnahmekopf 16 aus.

Die Befüll- und Entleervorgängen werden von einer nicht dargestellten Steuereinheit gesteuert. Die elektrische Verbindung erfolgt mittels der erfindungsgemäßen Steckeranordnung 1a, 1b, wobei zwei dieser Steckeranordnungen 1a in Figur 7 dargestellt sind.

Der Stecker 2a einer ersten Steckeranordnung 1a ist direkt am Entnahmekopf 16 befestigt. Ein zweiter Stecker 2b dieser Steckeranordnung 1a kann mit dem Stecker 2a einer zweiten Steckeranordnung 1b verbunden werden.

Die Kabel 3 dieser Steckeranordnungen 1a, 1b sind jeweils mit einem Schlauch 12 am chemisch beständigen Material umhüllt. Ebenfalls bestehen Gehäusekomponenten der Stecker 2a, 2b aus chemisch beständigem Material. Damit sind die Steckeranordnungen 1a, 1ben gegen aggressive Chemikaliendämpfe im Umfeld des Behälters geschützt.

### Bezugszeichenliste

- (1a, b): Steckeranordnung
- (2a, b): Stecker
- (3): Kabel
- (4a, b): Gehäuseteil
- (5a, b): Steckverbindungselement
- (6): Außengewinde
- (7a, b): Umgehäuse
- (8): Innengewinde
- (8a, b): Anschlusselement
- (9): Mutter
- (10): Kabelmantel
- (11): Leitung
- (12): Schlauch
- (13): Wand
- (14): Öffnung
- (15): Steckerausschnitt
- (16): Entnahmekopf
- (17): Schraubverschluss
- (18): Tauchrohr
- (19): Leitung
- (20): Belüftungsleitung

- (I): Bereich
- (II): Außenbereich

## Patentansprüche

1. Steckeranordnung (1a, 1b) mit wenigstens einem Stecker (2a, 2b) und einem in den Stecker (2a, 2b) einmündenden Kabel (3), **dadurch gekennzeichnet, dass** das Kabel (3) mit einem aus chemisch beständigem Material bestehenden Schlauch (12) umhüllt ist, der eine gas- und flüssigkeitsdichte Umhüllung ausbildet, und dass der Schlauch (12) eine dichte Schlauchverbindung zwischen Kabel (3) und Stecker (2a, 2b) ausbildet.

2. Steckeranordnung (1a, 1b) nach Anspruch 1, **dadurch gekennzeichnet, dass** sich der Schlauch (12) über die gesamte Länge des Kabels (3) erstreckt.

3. Steckeranordnung (1a, 1b) nach einem der Ansprüche 1 oder 2, **dadurch gekennzeichnet, dass** ein über ein Ende des Kabels (3) hervorstehender Endabschnitt des Schlauchs (12) durch eine Schlauchverschraubung im Stecker (2a, 2b) gelagert ist.

4. Steckeranordnung (1a, 1b) nach Anspruch 3, **dadurch gekennzeichnet, dass** die Schlauchverschraubung von einem Innengewinde (8) eines Umgehäuses (7a, 7b), das auf einem Außengewinde (6) eines Steckerteils aufgeschraubt ist, gebildet ist.

5. Steckeranordnung (1a, 1b) nach einem der Ansprüche 1 bis 4, **dadurch gekennzeichnet, dass** der Stecker (2a, 2b) Gehäusekomponenten bestehend aus chemisch beständigem Material aufweist.

6. Steckeranordnung (1a, 1b) nach einem der Ansprüche 1 bis 5, **dadurch gekennzeichnet, dass** das chemisch beständige Material ein säurebeständiger Kunststoff ist.

7. Steckeranordnung (1a, 1b) nach einem der Ansprüche 1 bis 6, **dadurch gekennzeichnet, dass** das chemisch beständige Material
| | |
|---|---|
| PE | (Polyethylen) oder |
| PP | (Polypropylen) oder |
| PFA | (Perfluoralkoxy) oder |
| PVDF | (Polyvinylidenfluorid) oder |
| PEEK | (Polyetheretherketon) ist. |

8. Steckeranordnung (1a, 1b) nach einem der Ansprüche 1 bis 7, **dadurch gekennzeichnet, dass** an einem Ende des Steckers (2a, 2b) das Kabel (3) einmündet, und dass der Stecker (2a, 2b) am gegenüberliegenden Ende ein Steckverbindungselement (5a, 5b) aufweist.

9. Steckeranordnung (1a, 1b) nach Anspruch 8, **dadurch gekennzeichnet, dass** das Steckverbindungselement (5a, 5b) des Steckers (2a, 2b) mit einem korrespondierenden Steckverbindungselement (5a, 5b) eines weiteren Steckers (2a, 2b) verbindbar ist.

10. Steckeranordnung (1a, 1b) nach einem der Ansprüche 1 bis 9, **dadurch gekennzeichnet, dass** der Stecker (2a, 2b) in einer Wanddurchführung gelagert ist.

11. Steckeranordnung (1a, 1b) nach Anspruch 10, **dadurch gekennzeichnet, dass** dieser abgedichtet in einer Öffnung (14) einer Wand (13) gelagert ist.

12. Steckeranordnung (1a, 1b) nach einem der Ansprüche 10 oder 11, **dadurch gekennzeichnet, dass** das am Stecker (2a, 2b) einmündende Kabel (3) an einer Seite der Wand (13) liegt und dass an der gegenüberliegenden Seite der Wand (13) an den Stecker (2a, 2b) ein weiterer Stecker (2a, 2b) anschließbar ist.

13. Steckeranordnung (1a, 1b) nach einem der Ansprüche 1 bis 12, **dadurch gekennzeichnet, dass** der Stecker (2a, 2b) an einem Entnahmekopf (16) eines Entnahmesystems angeschlossen ist.

14. Steckeranordnung (1a, 1b) nach einem der Ansprüche 1 bis 12, **dadurch gekennzeichnet, dass** das Kabel (3) an einem Entnahmekopf (16) eines Entnahmesystems ausmündet.
